# EUROPEAN PATENT SPECIFICATION

(11) **EP 3 284 923 B1**
(45) Date of publication and mention of the grant of the patent: **20.03.2019**
(21) Application number: 16184739.7
(22) Date of filing: 18.08.2016
(51) Int. Cl.: F01N 3/20, H01R 13/50, H01R 13/00

(54) **FLUID CIRCULATION SYSTEM FOR AUTOMOTIVE AND ASSOCIATED CONNECTOR**
FLUIDZIRKULATIONSSYSTEM FÜR AUTOMOBIL UND STECKER
SYSTEME DE CIRCULATION DE FLUIDE POUR AUTOMOBILE ET CONNECTEUR ASSOCIE

(43) Date of publication of application: 21.02.2018
(73) Proprietor: J.S.T. Mfg. Co., Ltd., Osaka 541-0045 (JP)
(72) Inventor: STROEYKENS, Erik, B-3190 Boortmeerbeek (BE)
(74) Representative: D Young & Co LLP

(56) References cited:
- EP-A2- 1 777 452
- WO-A1-2011/065583
- DE-A1-102010 062 985
- DE-A1-102012 211 512
- US-A- 5 669 763
- US-B1- 6 350 141

## Description

### TECHNICAL FIELD OF THE DISCLOSURE

The present disclosure relates to automotive fluid circulation systems, electrical connectors for connecting with, and providing heat to, automotive circulation systems, and methods of connecting connectors with automotive circulation systems.

Embodiments of the present technique can provide methods of providing heat to an automotive fluid part of automotive circulation systems using connectors whilst achieving secure mechanical and electrical connections.

### BACKGROUND OF THE DISCLOSURE

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present disclosure.

Connectors are known to provide arrangements for providing electrical and mechanical connections between electrical and mechanical parts, and are used in a variety of devices which have a variety of applications.

In some environments the electrical or mechanical connection provided by a connector can prove challenging. For example, in automotive applications, electrical components which are manufactured separately and then assembled on a production line must be provided with a connector which allows those parts when assembled to be electrically connected. However, automotive parts are typically of a highly complex nature, and so the design of a connector which is both stable during a transportation and delivery phase, and is able to mate securely to an automotive part in an often complex manner, can be difficult to achieve. In addition to this, a nature of automotive applications can mean that the connector is subject to vibration and/or significant temperature changes as well as the presence of foreign bodies such as dirt and contamination. Therefore providing an arrangement in which a connector can provide an electrical or mechanical connection which remains secure in these challenging conditions is desirable.

In related prior art, EP 1777452 A2 discloses a heated connector for connecting first and second fluid conduits together with a mating connector.

WO 2011/065583 A1 discloses a connector and vehicular wire harness connecting structure.

### SUMMARY OF THE DISCLOSURE

Embodiments of the present disclosure can provide an automotive circulation system comprising a flange portion, a cover portion comprising a conduit for automotive fluid and a connector portion configured to be inserted into the flange portion and to be mated with the cover portion. The connector portion comprises one or more heating elements, a rotatable hinge part configured to include the one or more heating elements for providing heat, when in an assembled position, to the automotive fluid within the conduit of the cover portion and configured to be manipulated from a first position to the assembled position via one or more other positions, a first locking part formed on the hinge part comprises a raised projection configured to contact with the rotatable hinge part such that the rotatable hinge part is kept substantially stable in the first position before the connector portion is inserted into the flange portion, a plurality of second locking parts each comprising a raised projection configured to contact with the rotatable hinge part such that the rotatable hinge part is kept substantially vertical in one of the other positions during the mating between the connector portion and the cover portion, and a truncated circular locking part configured to contact with the rotatable hinge part such that the rotatable hinge part is prevented from substantial lateral movement when in the vertical position and such that the rotatable hinge part can move laterally when in the assembled position. The rotatable hinge part of the connector portion is configured to rotate to the assembled position at which the one or more heating elements can provide heat to the automotive fluid after the connector portion has been inserted into the flange portion and mated with the cover portion.

In the assembled position, the heating elements are pressed against a tube part of the cover portion, wherein the automotive fluid is provided within the tube part. Accordingly, heat is provided to the automotive fluid part whilst achieving secure mechanical and electrical connections between the connector portion and the flange and cover portions, and as such, between the rotatable hinge part and the tube part.

The automotive circulation subsystem may also include an electrical subsystem comprising a plurality of electrical conductors configured to mate with a plurality of corresponding electrical conductors of the automotive circulation system. The conductors of the electrical subsystem are configured to mate with and provide the one or more heating elements of the connector portion to allow conduction of electricity into the connector portion. Various further aspects and features of the present technique are defined in the appended claims, which include an automotive circulation system, a connector for connecting with the automotive circulation system, and a method of connecting the connector with the automotive circulation system.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and wherein:
Figure 1 provides a three dimensional diagram showing an overview from a first angle of a connector in accordance with embodiments of the present disclosure;
Figure 2 provides a three dimensional diagram showing an overview from a second angle of a connector in accordance with embodiments of the present disclosure;
Figure 3 provides a diagram showing a side view of a connector in accordance with embodiments of the present disclosure;
Figure 4 provides a three dimensional diagram showing a section of a hinge part of a connector in a first position comprising a locking part configured to keep the hinge part stable in accordance with embodiments of the present disclosure;
Figure 5 provides a three dimensional diagram showing an overview of a cover portion of an automotive circulation system in accordance with embodiments of the present disclosure;
Figure 6 provides a three dimensional diagram showing an overview of a flange portion of an automotive circulation system in accordance with embodiments of the present disclosure;
Figure 7 illustrates a connection step of inserting a connector into a flange portion of an automotive circulation system in accordance with embodiments of the present disclosure;
Figure 8a illustrates a connection step of rotating a hinge part of a connector following insertion into a flange portion of an automotive circulation system in accordance with embodiments of the present disclosure;
Figure 8b illustrates the hinge part of the connector during the connection step of Figure 8a displaying a plurality of locking parts configured to keep the hinge part stable in a vertical position in accordance with embodiments of the present disclosure;
Figure 8c illustrates the hinge part of the connector during the connection step of Figure 8a displaying a truncated circular locking part of the hinge part configured to keep the hinge part stable in a vertical position in accordance with embodiments of the present disclosure;
Figure 9a illustrates a connection step of mating a connector to a cover portion of an automotive circulation system in accordance with embodiments of the present disclosure;
Figure 9b illustrates the mated connector and cover portion of the automotive circulation system following the connection step of Figure 9a in accordance with embodiments of the present disclosure;
Figure 10 illustrates a connection step of turning a hinge part of a connector into a final assembled position against a cover portion of an automotive circulation system following insertion of the connector into a flange portion of the automotive circulation system and mating of the connector to the cover portion in accordance with embodiments of the present disclosure;
Figure 11 provides a three dimensional diagram showing an overview of an automotive circulation system subsequent to connection, in which a hinge part of a connector is against a cover portion of the automotive circulation system in accordance with embodiments of the present disclosure;
Figure 12a provides a three dimensional diagram showing a first view of a hinge part of a connector, subsequent to mating of the connector and a cover portion of an automotive circulation system, where the hinge part is against a tube part of the cover portion in accordance with embodiments of the present disclosure;
Figure 12b provides a three dimensional diagram showing a first close-up view of the first view of the hinge part of Figure 12a;
Figure 12c provides a three dimensional diagram showing a second close-up view of the first view of the hinge part of Figure 12a and
Figure 13 provides a diagram showing a side elevation of the hinge part of the connector, subsequent to mating of the connector and the cover portion of the automotive circulation system, where the hinge part is against the tube part of the cover portion in accordance with embodiments of the present disclosure.

### DESCRIPTION OF EXAMPLE EMBODIMENTS

Hereinafter preferred embodiments of the present technique will be described in detail with reference to the appended drawings. Note that, in this specification and appended drawings, structural elements that have substantially the same function and structure are denoted with the same reference numerals, and repeated explanation of these structural elements is omitted.

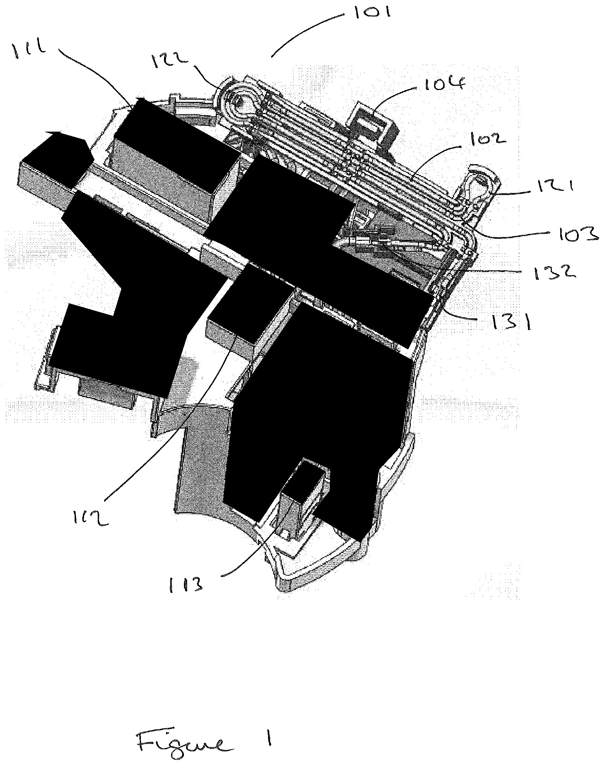

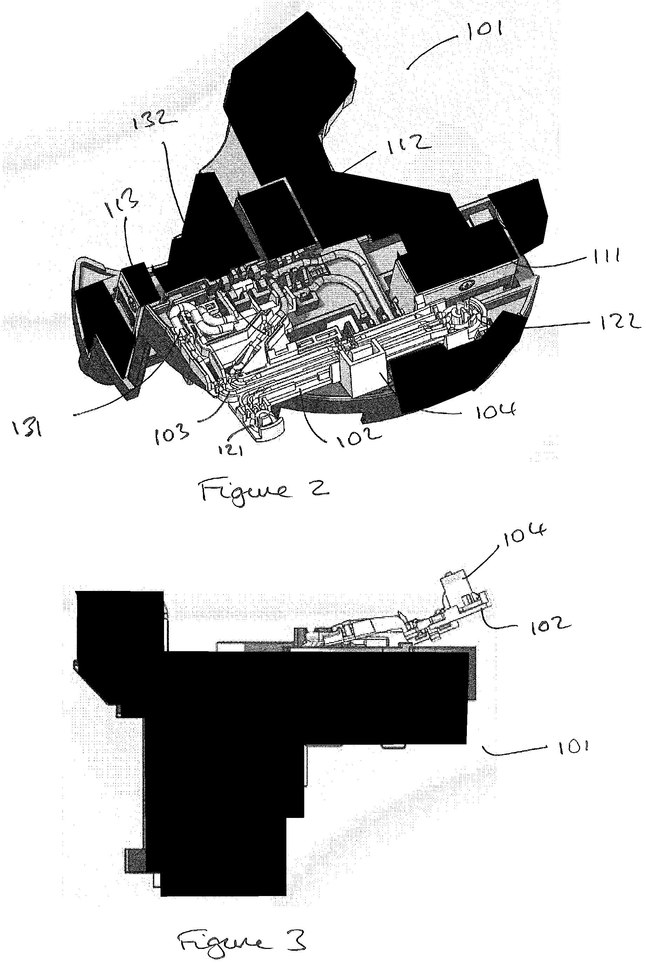

Figures 1 and 2 provide diagrams showing three dimensional views from a first angle and a second angle of a connector 101 in accordance with embodiments of the present disclosure. The connector 101 is configured to be connected with an automotive circulation system, and comprises a rotatable hinge part 102 which is configured to be manipulated from a first position to an assembled position via one or more other positions. The hinge part 102 is integral to the connector 101, and comprises a securing part 104 which protrudes from one side of the hinge part 102, the securing part 104 being configured to secure the hinge part 102 to the automotive circulation system when the hinge part 102 is in the assembled position. The hinge part 102 also comprises one or more heating elements 103 pressed against the hinge part 102, which may be formed of one or more wires in a coil or any other reasonable method. The heating elements or wire 103 may form loops at two ends 121, 122 of the hinge part 102, such that the heating wire 103 snakes along the length of the hinge part 102 and is operable to provide a greater heat density. The hinge part 102 further comprises two splices 131, 132, which connect the two ends of the heating element 103 to an electrical subsystem of the connector 101 and are configured to allow the hinge part 102 to rotate into the various positions. The electrical subsystem of the connector 101 comprises a plurality of electrical conductors 111, 112, 113 which are configured to mate with a plurality of corresponding electrical conductors of the automotive circulation system when connected. The electrical subsystem allows the conduction of electricity into the connector 101, for example in order to heat the heating elements 103.

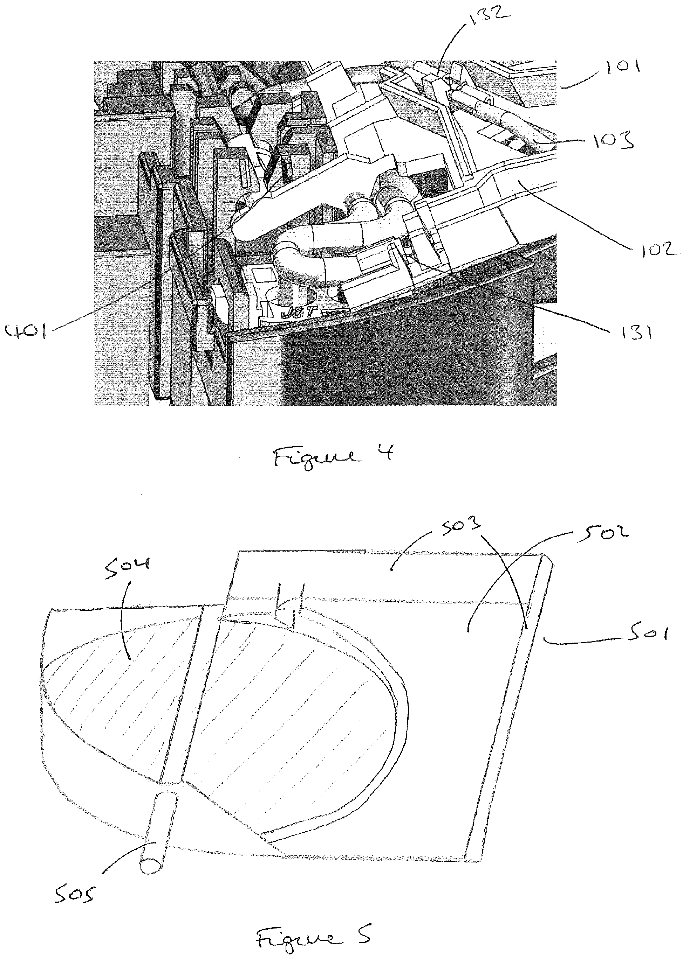

Figure 3 provides a diagram showing a side view of the connector 101 in accordance with embodiments of the present disclosure. As can be seen, one end of the hinge part 102 is raised slightly, with the securing portion 104 protruding upwards and away from the connector 101. This is the first position in which the hinge part 102 is configured to be, during the transportation and delivery stages. Figure 4 shows a close-up view of the hinge part 102 in the first position during the transportation and delivery stage of the connector 101 as shown in Figure 3. As can be seen, Figure 4 shows the lower portion of the hinge part 102, in which either side of the heating wire 103 are connected to the splices 131, 132. The hinge part 102 comprises a first locking part 401, or dot, which comprises a raised projection configured to contact with the hinge part 102 such that the hinge part 102 is kept substantially stable in the first position before the connector 101 is connected with the automotive circulation system. The first locking part 401, or dot, prevents the hinge part 102 from moving from the first position during the transportation of the connector 101 between its place of manufacture and a place of assembly where it is connected with the automotive circulation system.

The automotive circulation system described in embodiments of the present disclosure may be a form of supplementary processing adaptation such as a selective catalytic reduction (SCR) system. SCR systems are operable to convert nitrogen oxides, which are formed during combustion at high temperatures and found in exhaust gases of diesel engines of ships, turbines, locomotives, automobiles, etc., into substances such as nitrogen (N₂ - diatomic nitrogen formed of two nitrogen atoms) and water (H₂O). The conversion of nitrogen oxides, which can be harmful to human health, into such molecules as N₂ and H₂O requires a reductant, such as ammonia or urea, which is added to a stream of the exhaust gas and adsorbed onto a catalyst.

However, in low temperatures, there is a risk of the reductant freezing, and the subsequent failure of the catalytic conversion. Providing heat to the reservoir which carriers the reductant can reduce a possibility of the reductant freezing.

Figure 5 provides a diagram showing an overview of a cover portion 501 of the automotive circulation system in accordance with embodiments of the present disclosure. The cover portion 501 comprises an outer wall 503 formed on a top surface 502, the outer wall 503 having a height which varies throughout a perimeter of the cover portion 501, and an opening 504 configured to allow protruding parts of the connector 101 to pass through the cover portion 501 during the mating of the cover portion 501 to the connector 101. This opening 504 may be substantially circular.

The cover portion 501 also comprises a tube part 505, which is connected to opposing sides of the outer wall 503 of the cover portion 501, and bridges the opening 504. In automotive circulation systems such as an SCR system as described above, this tube 505 is a reservoir which transports the reductant, for example urea, before its adsorption onto the catalyst. The automotive circulation system may comprise components such as a temperature sensor which may measure system parameters, such as a current temperature of the automotive fluid (the reductant) passing through the tube part 505. These components may be independent of the tube 505 and fluid, and may measure parameters such as the ambient temperature. Alternatively, these components may be directly connected to the tube part 505 and/or fluid.

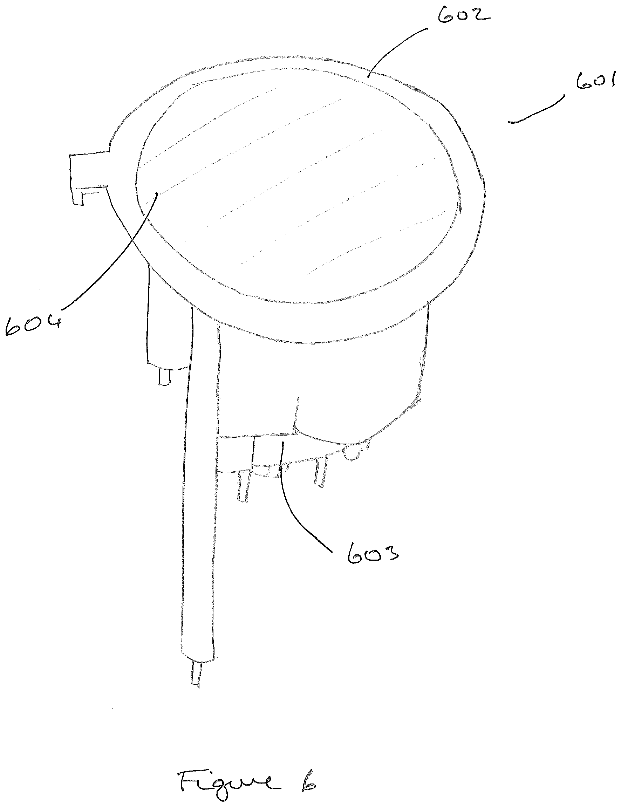

Figure 6 provides a diagram showing an overview of a flange portion 601 of the automotive circulation system in accordance with embodiments of the present disclosure. The flange portion 601 comprises an outside rim 602, a opening comprising a counterpart connector 604, which may be substantially circular, for connecting to the connector 101, and an underside 603 which is operable to connect to an overall system, which may be for example a diesel automobile structural panel, framework or other reasonable mounting location.

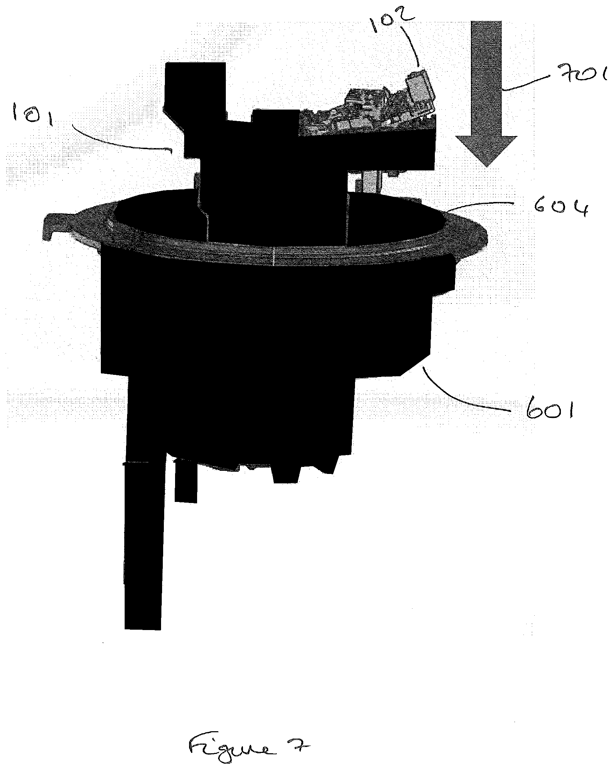

Figures 7 to 10 illustrate a method of connecting the connector 101 of Figures 1 to 4 to an automotive circulation system which comprises the cover portion of Figure 5 and the flange portion of Figure 6.

Figure 7 illustrates a first connection step 701 of inserting the connector 101 into the flange portion 601 of the automotive circulation system in accordance with embodiments of the present disclosure. The hinge part 102 of the connector 101 is configured to remain, during this first connection step 701 of inserting the connector 101 into the flange portion 601, in the first position as illustrated in Figure 3, which is achieved using the first locking part 401. The insertion of the connector 101 into the flange portion 601 comprises lowering 701 the connector 101 into the opening comprising the counterpart connector 604 of the flange portion 601, such that the connector 101 sits in place within the flange portion 601.

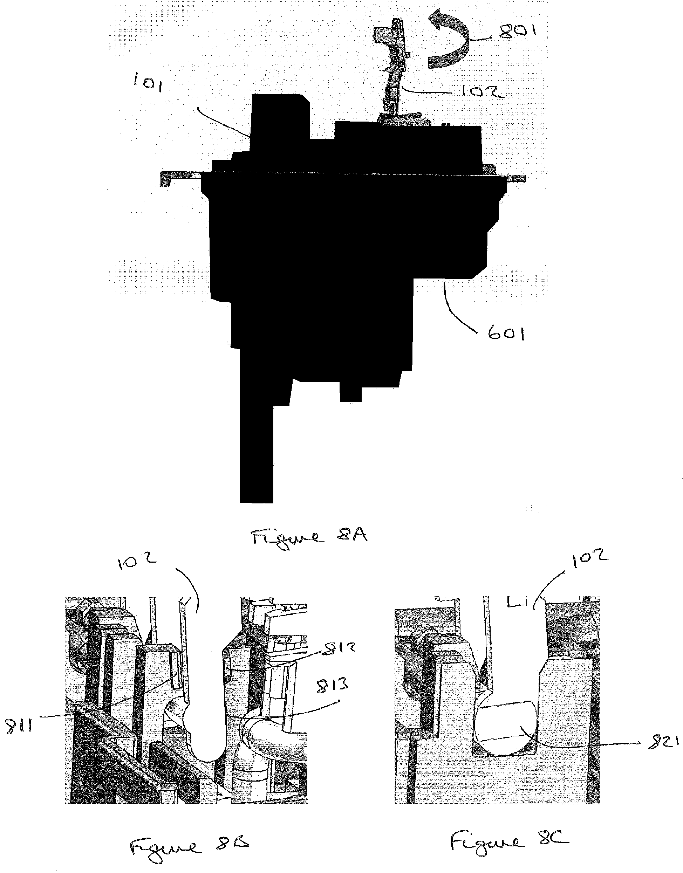

Figure 8a illustrates a second connection step 801 of rotating the hinge part 102 of the connector 101 following the insertion 701 of the connector 101 into the flange portion 601 of the automotive circulation system in accordance with embodiments of the present disclosure. The rotation of the hinge part 102 during the second connection step 801 comprises rotating the hinge part 102 by 90°, such that the hinge part 102 is in a substantially vertical position as shown in Figure 8a. In various arrangements of the present disclosure, the rotation of the hinge part 102 during the second connection step 801 may comprise rotating the hinge part 102 by an amount greater than or less than 90°.

Figure 8b illustrates the hinge part 102 of the connector 101 during the second connection step 801 of Figure 8a viewed close-up, displaying a plurality of second locking parts 811, 812, 813 configured to keep the hinge part 102 stable in the vertical position as shown in Figure 8a in accordance with embodiments of the present disclosure. These second locking parts 811, 812, 813, or dots, comprise raised projections configured to contact with the hinge part 102 such that the hinge part 102 is kept substantially stable in the substantially vertical position, and are located on the lower end of the hinge part 102 as displayed in Figure 8a, at the portion at which the hinge part 102 is connected to the connector 101.

Figure 8c illustrates the hinge part 102 of the connector 101 during the second connection step 801 of Figure 8a viewed up close, displaying a truncated circular locking part 821 of the hinge part 102 configured to keep the hinge part stable in the vertical position as shown in Figure 8a in accordance with embodiments of the present disclosure. The truncated circular locking part 821 configured to contact with the hinge part 102 such that it prevents the hinge part 102 from moving laterally whilst in the vertical position, but allows lateral movement in the final, assembled position, and is located on the lower end of the hinge part 102 as displayed in Figure 8a, at the portion at which the hinge part 102 is connected to the connector 101.

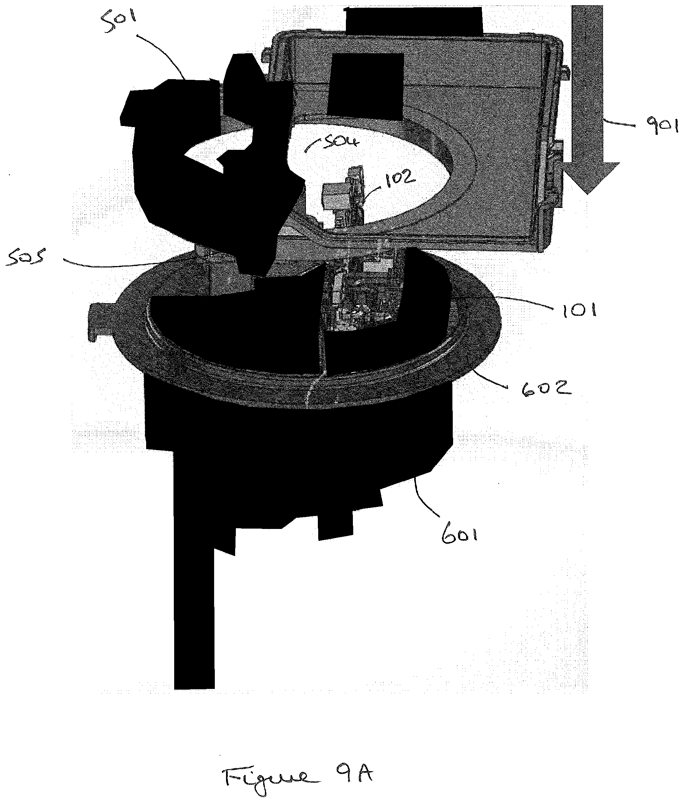

Figure 9a illustrates a third connection step 901 of mating the connector 101, which has been inserted into the flange portion 601 during step 701 and rotated into the vertical position during step 801, to the cover portion 501 of the automotive circulation system in accordance with embodiments of the present disclosure. The hinge part 102 of the connector 101 is configured to remain, during this third connection step 901 of mating the connector 101 to the cover portion 501, in the vertical position as illustrated in Figure 8a, which is achieved using the plurality of second locking parts 811, 812, 813 and the truncated circular locking part 821 of the hinge part 102 The mating of the connector 101 to the cover portion 501 comprises lowering 901 the cover portion 501, such that the cover portion is positioned and sat on the outer rim 602 of the flange portion 601. During this third connection step 901, protruding parts of the connector 101, i.e. the hinge part 102, pass through the opening 504 of the cover portion, without being obstructed by the tube part 505 which bridges this opening 504.

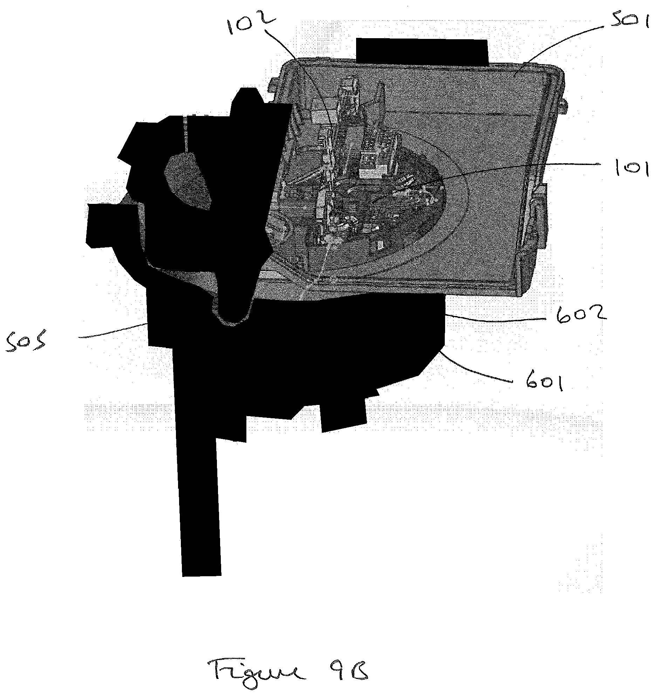

Figure 9b illustrates the mated connector 101 and cover portion 501 of the automotive circulation system following the connection step 901 of Figure 9a in accordance with embodiments of the present disclosure. As can be seen in Figure 9b, the cover portion 501 sits atop the connector 101 and the outer rim 602 of the flange portion 601, with the tube part 505 bridging the mated connector 101 and the hinge part 102 of the connector 101 protruding out from the top of the mated connector 101 and cover portion 501 of the automotive circulation system.

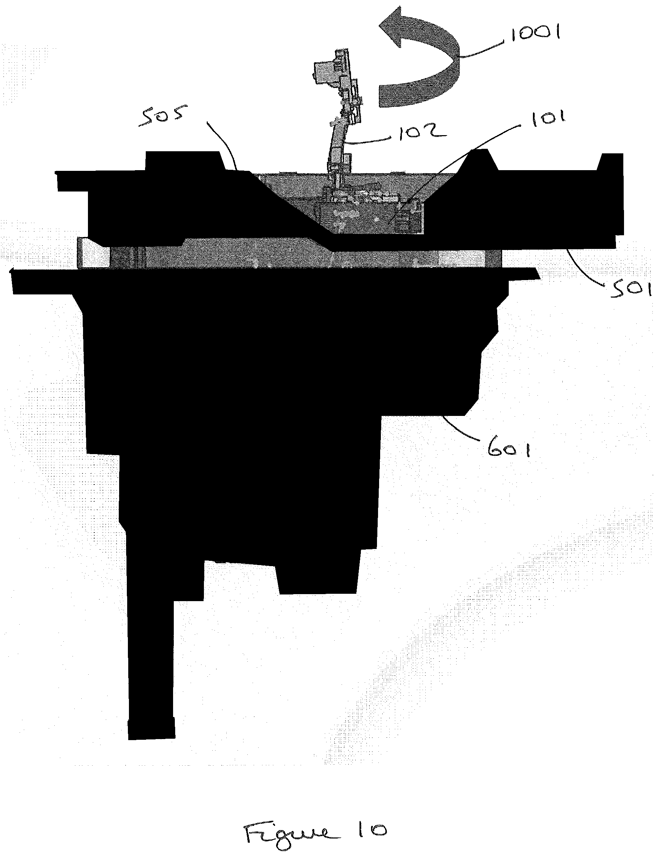

Figure 10 illustrates a fourth connection step 1001 of turning the hinge part 102 of the connector 101 into a final, assembled position against the cover portion 501 of the automotive circulation system following insertion 701 of the connector into the flange portion 601 of the automotive circulation system, rotation 801 of the hinge part 102 into the vertical position, and mating 901 of the connector 101 to the cover portion 501 in accordance with embodiments of the present disclosure. The turning of the hinge part 102 during the fourth connection step 1001 comprises turning the hinge part 102 by 85°, such that the hinge part 102 is in an assembled position as shown in Figure 10. In various arrangements of the present disclosure, the turning of the hinge part 102 during the fourth connection step 1001 may comprise turning the hinge part 102 by an amount greater than or less than 85°.

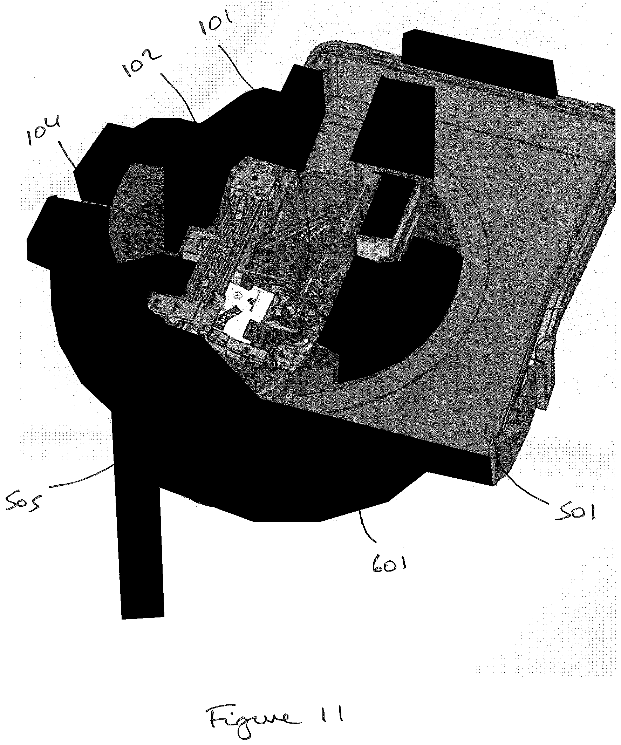

Figure 11 provides a diagram showing an overview of the automotive circulation system subsequent to connection, in which the hinge part 102 of the connector 101 is in the assembled position against the cover portion 501 of the automotive circulation system and inserted into the flange portion 601 of the automotive circulation system in accordance with embodiments of the present disclosure. In the assembled position, the hinge part 102 contacts the tube part 505 of the cover portion 501. Specifically, in the assembled position, the heating elements 103 comprised by the hinge part 102 contact the tube part 505 of the cover portion 501, providing heat when in the assembled position to the automotive fluid system (comprising the reductant, e.g. urea, passing through the tube part 505) in order to prevent or at least reduce a possibility of the fluid from freezing during low temperatures. The securing part 104 comprised by the hinge part 102 is configured to lock to the cover portion 501, ensuring a stable and secure mechanical and electrical connection.

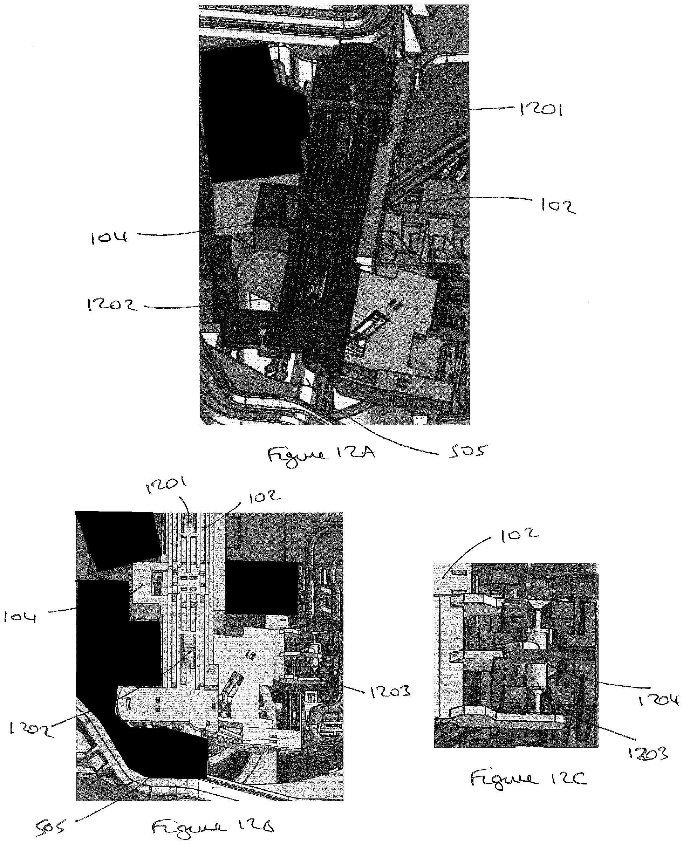

Figure 12a provides a diagram showing a first view of the hinge part 102 of the connector 101, subsequent to mating of the connector 101 and the cover portion 501 of an automotive circulation system, where the hinge part 102 is against the tube part 505 of the cover portion 501 in accordance with embodiments of the present disclosure. The hinge part 102 comprises one or more springs 1201, 1202 configured to push the heating element 103 comprised by the hinge part 102 against the tube part 505 of the cover portion 501 subsequent to the mating of the connector 101 to the cover portion 501 such that the heating elements or wires 103 contact the tube part 505 and accordingly provide heat to the tube part 505.

Figure 12b provides a diagram showing a first close-up view of the first view of the hinge part 102 of Figure 12a. Further to that shown in Figure 12a, the hinge part 102 comprises one or more third locking parts 1203, which comprise protrusions which contact with the cover portion 501 following the connection method as described in Figures 7 to 10, and stop the cover portion 501 from undesirably moving up and out of position.

Figure 12c provides a diagram showing a second close-up view of the first view of the hinge part 102 of Figure 12a, demonstrating that the one or more third locking parts 1203 allow a free horizontal movement 1204 in either horizontal direction. This free horizontal movement 1204 compensates for a tolerance difference during the assembly process.

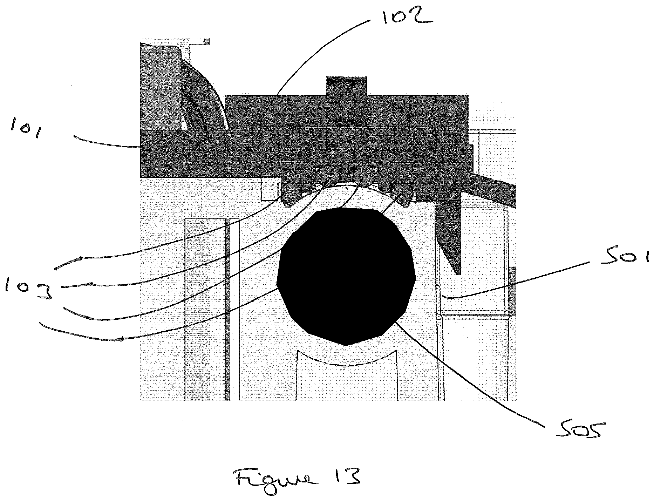

Figure 13 provides a diagram showing a second view of the hinge part 102 of the connector 101, subsequent to mating of the connector 101 and the cover portion 501 of the automotive circulation system, where the hinge part 102 is against the tube part 505 of the cover portion 501 in accordance with embodiments of the present disclosure. The heating elements 103 are shown in contact with and pressed against the tube part 505 of the cover portion, configured to provide heat when in the assembled position to the automotive fluid system in order to prevent the fluid from freezing during low temperatures.

Various further aspects and features of the present technique are defined in the appended claims. Various modifications may be made to the embodiments hereinbefore described within the scope of the appended claims. For example, although the connector has been described with regard to an automotive circulation system, the connector comprising the movable and rotatable hinge part may be used for other applications outside of the field of automotive technology.

## Claims

1. An electrical connector (101) for connecting to a flange portion (601) of an automotive fluid circulation system and to a cover portion (501) of the automotive fluid circulation system comprising a conduit (505) for the automotive fluid, the electrical connector comprising
one or more heating elements (103),
a rotatable hinge part (102) configured to include the one or more heating elements for providing heat, when in an assembled position, to the automotive fluid within the conduit of the cover portion and configured to be manipulated from a first position to the assembled position via one or more other positions,
a first locking part (401) comprising a raised projection configured to contact with the rotatable hinge part such that the rotatable hinge part is kept substantially stable in the first position before the connector is inserted into the flange portion,
a plurality of second locking parts (811, 812, 813) each comprising a raised projection configured to contact with the rotatable hinge part such that the rotatable hinge part is kept substantially vertical in one of the other positions during the mating between the connector and the cover portion, and
a truncated circular locking part (821) configured to contact with the rotatable hinge part such that the rotatable hinge part is prevented from substantial lateral movement when in the vertical position and such that the rotatable hinge part can move laterally when in the assembled position, wherein the rotatable hinge part of the connector portion is configured to rotate to the assembled position at which the one or more heating elements can provide heat to the automotive fluid after the connector has been inserted into the flange portion and mated with the cover portion.

2. An automotive fluid circulation system comprising
a flange portion (601),
a cover portion (501) comprising a conduit (505) for automotive fluid, and
an electrical connector (101) according to claim 1, configured to be inserted into the flange portion and to be mated with the cover portion.

## Patentansprüche

1. Elektrischer Stecker (101) zur Verbindung mit einem Flanschteil (601) eines Automobilfluidzirkulationssystems und mit einem Abdeckteil (501) des Automobilfluidzirkulationssystems, der eine Leitung (505) für das Automobilfluid umfasst, wobei der elektrische Stecker Folgendes umfasst:
ein oder mehrere Heizelemente (103),
ein drehbares Scharnierteil (102), das dahingehend konfiguriert ist, das eine oder die mehreren Heizelemente zur Bereitstellung von Wärme, in einer montierten Position, für das Automobilfluid in der Leitung des Abdeckteils zu enthalten, und dahingehend konfiguriert ist, aus einer ersten Position über eine oder mehrere andere Positionen in die montierte Position betätigt zu werden,
ein erstes Verriegelungsteil (401), das einen erhabenen Vorsprung umfasst, der dahingehend konfiguriert ist, mit dem drehbaren Scharnierteil in Kontakt zu gelangen, so dass das drehbare Scharnierteil in der ersten Position im Wesentlichen stabil gehalten wird, bevor der Stecker in den Flanschteil eingeführt wird,
mehrere zweite Verriegelungsteile (811, 812, 813), die jeweils einen erhabenen Vorsprung umfassen, welche jeweils dahingehend konfiguriert sind, mit dem drehbaren Scharnierteil in Kontakt zu gelangen, so dass das drehbare Scharnierteil in einer der anderen Positionen während des Zusammenfügens des Steckers und des Abdeckteils im Wesentlichen vertikal gehalten wird, und
ein kegelstumpfförmiges kreisförmiges Verriegelungsteil (821), das dahingehend konfiguriert ist, mit dem drehbaren Scharnierteil in Kontakt zu gelangen, so dass das drehbare Scharnierteil an einer im Wesentlichen lateralen Bewegung gehindert wird, wenn es sich in der vertikalen Position befindet, und so dass sich das drehbare Scharnierteil lateral bewegen kann, wenn es sich in der montierten Position befindet, wobei das drehbare Scharnierteil des Steckerteils dahingehend konfiguriert ist, sich in die montierte Position zu drehen, in der das eine oder die mehreren Heizelemente dem Automobilfluid Wärme zuführen können, nachdem der Stecker in den Flanschteil eingeführt und mit dem Abdeckteil zusammengefügt worden ist.

2. Automobilfluidzirkulationssystem, umfassend:
einen Flanschteil (601),
einen Abdeckteil (501), der eine Leitung (505) für Automobilfluid umfasst, und
einen elektrischen Stecker (101) nach Anspruch 1, der zum Einführen in den Flanschteil und zum Zusammenfügen mit dem Abdeckteil konfiguriert ist.

## Revendications

1. Connecteur électrique (101) pour la connexion à une partie de bride (601) d'un système de circulation de fluide automobile et à une partie de couvercle (501) du système de circulation de fluide automobile comprenant un conduit (505) pour le fluide automobile, le connecteur électrique comprenant
un ou plusieurs éléments chauffants (103),
une partie d'articulation rotative (102) configurée pour inclure le ou les éléments chauffants pour fournir de la chaleur, lorsqu'elle est dans une position assemblée, au fluide automobile à l'intérieur du conduit de la partie de couvercle et configurée pour être manipulée d'une première position à la position assemblée en passant par une ou plusieurs autres positions,
une première partie de verrouillage (401) comprenant une saillie rehaussée configurée pour venir en contact avec la partie d'articulation rotative de telle sorte que la partie d'articulation rotative soit maintenue de manière sensiblement stable dans la première position avant l'insertion du connecteur dans la partie de bride,
une pluralité de deuxièmes parties de verrouillage (811, 812, 813) comprenant chacune une saillie rehaussée configurée pour venir en contact avec la partie d'articulation rotative de telle sorte que la partie d'articulation rotative soit maintenue sensiblement verticalement dans l'une des autres positions au cours de l'accouplement entre le connecteur et la partie de couvercle, et
une partie de verrouillage circulaire tronquée (821) configurée pour venir en contact avec la partie d'articulation rotative de telle sorte que la partie d'articulation rotative ne puisse pas sensiblement se déplacer latéralement lorsqu'elle est dans la position verticale et de telle sorte que la partie d'articulation rotative puisse se déplacer latéralement lorsqu'elle est dans la position assemblée, la partie d'articulation rotative de la partie de connecteur étant configurée pour tourner dans la position assemblée à laquelle le ou les éléments chauffagents peuvent fournir de la chaleur au fluide automobile après l'insertion du connecteur dans la partie de bride et après son accouplement avec la partie de couvercle.

2. Système de circulation de fluide automobile comprenant
une partie de bride (601),
une partie de couvercle (501) comprenant un conduit (505) pour du fluide automobile, et
un connecteur électrique (101) selon la revendication 1, configuré pour être inséré dans la partie de bride et pour être accouplé avec la partie de couvercle.
